(19) Europäisches Patentamt / European Patent Office / Office européen des brevets

(11) **EP 3 955 178 A1**

(12) **EUROPEAN PATENT APPLICATION**
published in accordance with Art. 153(4) EPC

(43) Date of publication:
**16.02.2022 Bulletin 2022/07**

(21) Application number: **19930091.4**

(22) Date of filing: **20.05.2019**

(51) International Patent Classification (IPC):
**G06N 20/00** (2019.01)

(52) Cooperative Patent Classification (CPC):
**G06N 20/00**

(86) International application number:
**PCT/JP2019/019963**

(87) International publication number:
**WO 2020/234977 (26.11.2020 Gazette 2020/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON TELEGRAPH AND
TELEPHONE CORPORATION
Chiyoda-ku, Tokyo 100-8116, (JP)**

(72) Inventor: **YAMADA, Masanori
Musashino-shi, Tokyo 180-8585 (JP)**

(74) Representative: **Hoffmann Eitle
Patent- und Rechtsanwälte PartmbB
Arabellastraße 30
81925 München (DE)**

(54) **INFORMATION PROCESSING DEVICE, CREATION METHOD, AND CREATION PROGRAM**

(57) An information processing apparatus (10) calculates, with respect to datasets into which data is divided based on individual labels serving as candidates for an index when the data is divided, the amount of information for each of division methods that use the respective labels. Then, the information processing apparatus (10) divides the data into a plurality of datasets based on the division method that provides the highest amount of information, of the calculated amounts of information, and creates, with use of the thus divided datasets, a learned model for each dataset.

Fig. 2

**Description**

[Technical Field]

The present invention relates to an information processing apparatus, a creation method, and a creation program.

[Background Art]

A conventionally known approach to anomaly-based anomaly detection using unsupervised learning is to learn probability distributions of normal data from the normal data and create models. Here, if a learned model is created without dividing data, the detection performance degrades, but the learning cost decreases, and also the model can be reused. On the other hand, if a learned model is created by dividing data based on a certain index such as IP address, the detection performance improves, but the learning cost increases, and the model cannot be reused. Thus, there are trade-offs. Furthermore, there also exists a method of performing an exhaustive check regarding various division granularities to find an appropriate division granularity that does not degrade the detection performance.

[Citation List]

[Non Patent Literature]

Non Patent Literature 1: D. P. Kingma, M. Welling, "Auto-Encoding Variational Bayes," 1.3.2014. [online], [searched on May 15, 2019], Internet (https://arxiv.org/pdf/1312.6114.pdf

[Summary of the Invention]

[Technical Problem]

However, the aforementioned method of performing an exhaustive check regarding various division granularities to find an appropriate division granularity that does not degrade the detection performance requires a high learning cost, and therefore, there is a problem in that it is difficult to determine an appropriate data division method at a low learning cost.

[Means for Solving the Problem]

In order to address the above-described problem and achieve an object, an information processing apparatus of the present invention includes: a calculation unit configured to calculate, with respect to datasets into which data is divided based on individual labels serving as candidates for an index when the data is divided, an amount of information for each of division methods that use the respective labels; a division unit configured to divide the data into a plurality of datasets based on the division method that provides the highest amount of information, of the amounts of information calculated by the calculation unit; and a creation unit configured to create, with use of the datasets divided by the division unit, a learned model for each of the dataset.

[Effects of the Invention]

The present invention has the effect of making it possible to determine an appropriate data division method at a low learning cost.

[Brief Description of Drawings]

[Fig. 1]

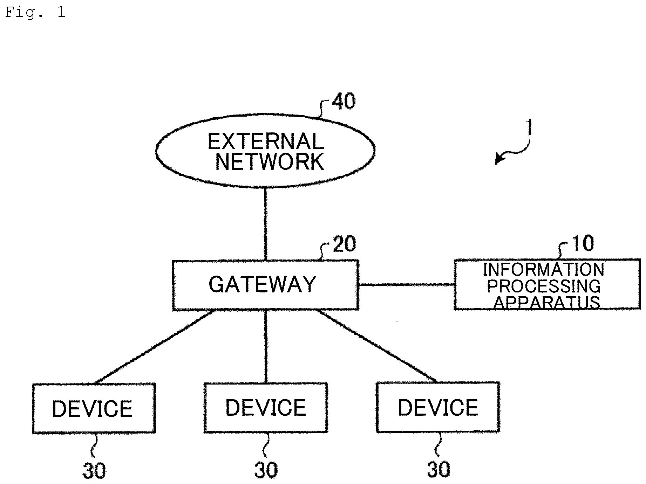

Fig. 1 is a diagram showing an example of the configuration of a detection system according to a first embodiment.
[Fig. 2]

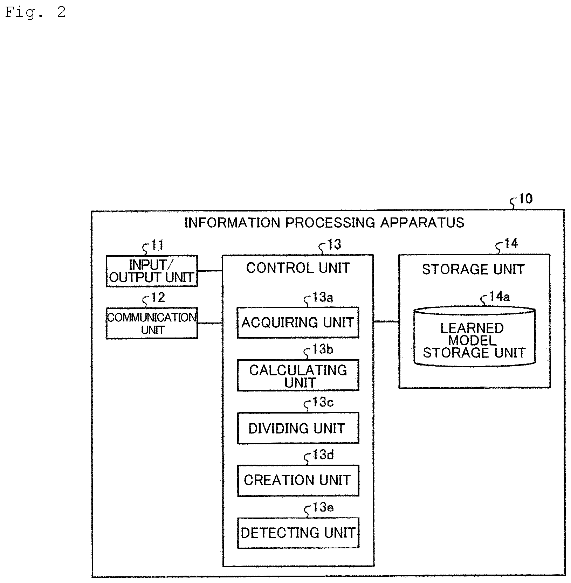

Fig. 2 is a diagram showing an example of the configuration of an information processing apparatus according to the first embodiment.
[Fig. 3]

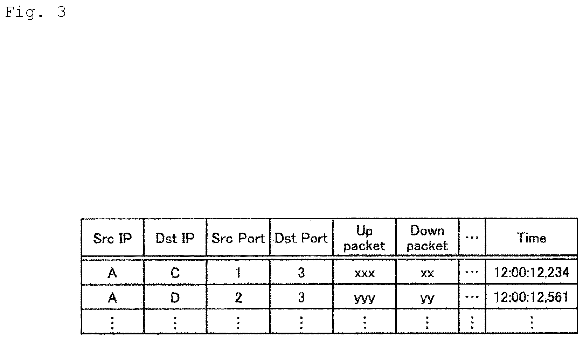

Fig. 3 shows an example of traffic data.

[Fig. 4]

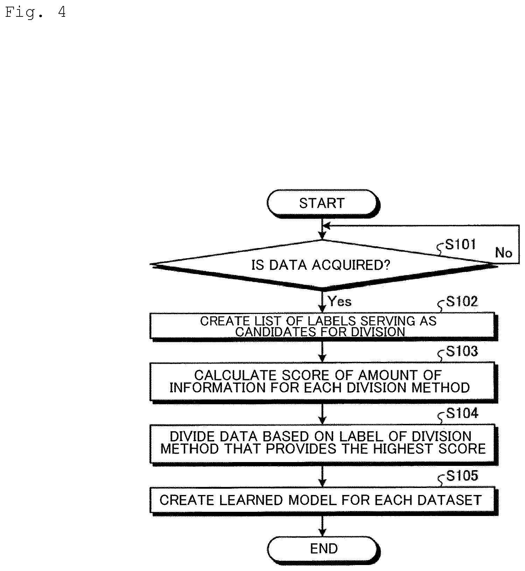

Fig. 4 is a flowchart illustrating an example of the flow of processing performed by the information processing apparatus according to the first embodiment.
[Fig. 5]

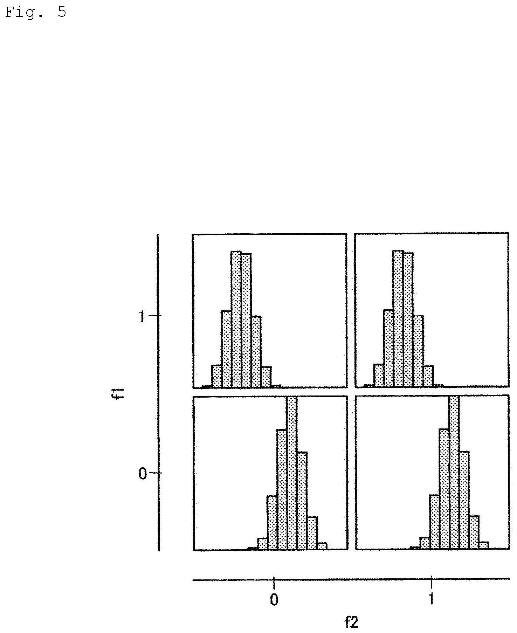

Fig. 5 is a diagram for explaining the effects of the first embodiment.
[Fig. 6]

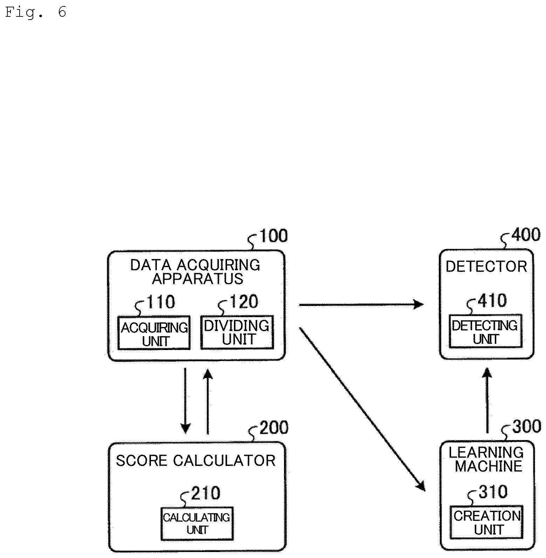

Fig. 6 is a diagram showing an example of the configuration of a detection system according to another embodiment.
[Fig. 7]

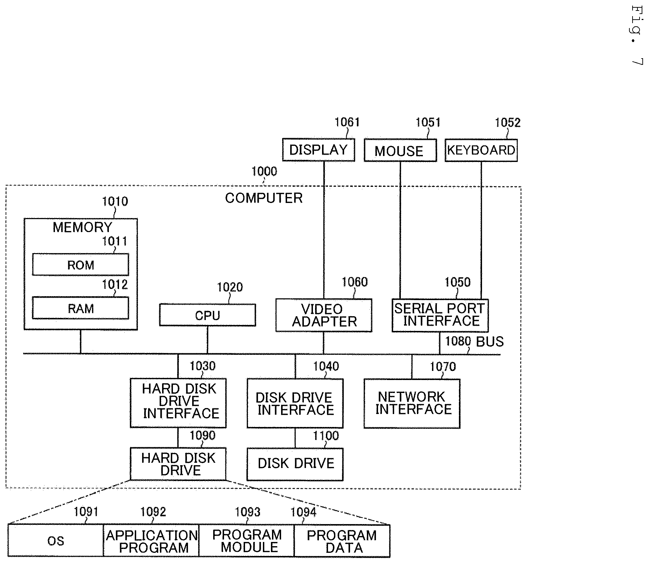

Fig. 7 is a diagram showing a computer that executes a creation program.

[Description of Embodiments]

Hereinafter, embodiments of an information processing apparatus, a creation method, and a creation program according to the present application will be described in detail based on the drawings. Note that the information processing apparatus, the creation method, and the creation program according to the present application are not limited to the following embodiments.

[First Embodiment]

In an embodiment below, the configuration of an information processing apparatus 10 according to a first embodiment and the flow of processing performed by the information processing apparatus 10 will be described in this order, and finally, the effects of the first embodiment will be described.

[Configuration of First Embodiment]

First, the configuration of a detection system according to the first embodiment will be described using Fig. 1. Fig. 1 is a diagram showing an example of the configuration of the detection system according to the first embodiment. As shown in Fig. 1, a detection system 1 has the information processing apparatus 10, a gateway 20, and devices 30, and the gateway 20 is connected to an external network 40.
The information processing apparatus 10 acquires normal-state data and detection target data regarding the devices 30, learns the acquired normal-state data, and performs anomaly detection on the acquired detection target data. For example, the information processing apparatus 10 acquires logs and the like of communications that are performed between the external network 40 and the devices 30 and that pass through the gateway 20. The devices 30 each may be, for example, an IoT device, such as a surveillance camera or a wearable device . For example, in the case where a device 30 is a surveillance camera, the information processing apparatus 10 can acquire traffic data at the time when the resolution of the surveillance camera is changed, as normal-state data.
Next, the configuration of the information processing apparatus 10 will be described using Fig. 2. Fig. 2 is a diagram showing an example of the configuration of the information processing apparatus 10 according to the first embodiment. As shown in Fig. 2, the information processing apparatus 10 has an input/output unit 11, a communication unit 12, a control unit 13, and a storage unit 14.
The input/output unit 11 receives data input from a user. Examples of the input/output unit 11 include input devices, such as a mouse and a keyboard, and display devices, such as a display and a touch screen. The communication unit 12 performs data communication with other apparatuses via a network. For example, the communication unit 12 is an NIC (Network Interface Card) . The communication unit 12 performs data communication with the gateway 20, for example.
The storage unit 14 is a storage device, such as an HDD (Hard Disk Drive), an SSD (Solid State Drive), or an optical disk. Note that the storage unit 14 may also be a data-rewritable semiconductor memory, such as a RAM (Random Access Memory), a flash memory, or an NVSRAM (Non Volatile Static Random Access Memory). The storage unit 14 stores an OS (Operating System) and various programs that are executed by the information processing apparatus 10. Furthermore, the storage unit 14 stores various kinds of information that are used to execute the programs. In addition, the storage unit 14 has a learned model storage unit 14a. The learned model storage unit 14a stores parameters and the like of learned models.
The control unit 13 controls the entire information processing apparatus 10. The control unit 13 is, for example, an electronic circuit, such as a CPU (Central Processing Unit), a GPU (Graphics Processing Unit), a TPU (Tensor Processing Unit), or an MPU (MicroProcessing Unit), or an integrated circuit, such as an ASIC (Application Specific Integrated Circuit) or an FPGA (Field Programmable Gate Array). The control unit 13 has an internal memory for storing programs that specify various processing procedures, as well as control data, and executes processing using the internal memory. The control unit 13 functions as various processing units by various programs running. For example, the control unit 13 has an acquisition unit 13a, a calculation unit 13b, a division unit 13c, a creation unit 13d, and a detection unit 13e.

The acquisition unit 13a acquires traffic data as learning data or detection target data. For example, the acquisition unit 13a may acquire traffic data from the devices 30 in real time, or may be configured to acquire traffic data that is input automatically or manually at predetermined times.

Here, a specific example of the traffic data acquired by the acquisition unit 13a will be described using Fig. 3. Fig. 3 shows an example of the traffic data. As illustrated in Fig. 3, for example, the acquisition unit 13a acquires the following data and the like as the traffic data. The first item is "Src IP" that indicates source IP address. The second item is "Dst IP" that indicates destination IP address. The third item is "Src Port" that indicates source IP address. The fourth item is "Dst Port" that indicates destination IP address. The fifth item is "Up packet" that indicates information (e.g., the number of bytes in a packet, etc.) regarding upstream packets sent from the devices 30 toward the external network 40. The sixth item is "Down packet" that indicates information regarding upstream packets sent from the devices 30 toward the external network 40. The seventh item is "Time" that indicates the time at which packets are sent or received.

The calculation unit 13b calculates, with respect to datasets into which data is divided based on individual labels serving as candidates for an index when the data is divided, the amount of information for each of division methods that use the respective labels. For example, upon receiving the traffic data acquired by the acquisition unit 13a, the calculation unit 13b creates a list of labels serving as the candidates for division. Note that the label list may be set manually in advance.

Then, the calculation unit 13b, for example, calculates the score of the amount of mutual information with respect to a label f using an equation (1) below. Hereinafter, let "f" denote a label, and "$V_f$" be a value taken by the label f. Note that, although the second term requires a high calculation cost, it is a common term that does not depend on f and therefore may be ignored in the calculation here.

[Math. 1]

$$I(x, v_f) = E_{x, v_f \sim p(x, v_f)}\big[\log p(x|v_f) - \log p(x)\big]$$
$$= E_{v_f \sim p(v_f)}\big[E_{x \sim p(x|v_f)}[\log p(x|v_f)]\big] - E_{x \sim p(x)}[\log p(x)] \qquad \cdots (1)$$

where

$$I(x, y) \equiv D_{KL}\big(p(x, y)\big\|p(x)p(y)\big)$$

Note that it is assumed that the distribution of "x|vfv$_f$" in the calculation of the amount of mutual information is already known. For estimation of the distribution of "x|vf$_f$", a VAE (Variational AutoEncoder) may be used as a method for performing probability density estimation from sampling (see Reference 1 below).

Reference 1: Diederik P. Kingma, Max Welling, "Auto-Encoding Variational Bayes", <URL:https://arxiv.org/abs/1312.6114>

However, when the calculation unit 13b estimates the distribution of "x|vfv$_f$" using the VAE, calculation is costly. For this reason, a MINE (Mutual Information Neural Estimation), which is a method for calculating the amount of mutual information from sampling, may be used (see Reference 2 below). The calculation unit 13b may be configured to calculate the amount of mutual information for each label using the MINE. Since the calculation unit 13b can calculate the amount of mutual information for each label using the MINE without involving estimation of the probability distribution p(x) from a dataset x, the calculation cost can be reduced.

Reference 2: Mohamed Ishmael Belghazi, Aristide Baratin, Sai Rajeswar, Sherjil Ozair, Yoshua Bengio, Aaron Courville, R Devon Hjelm, "Mutual Information Neural Estimation", <https://arxiv.org/pdf/1801.04062.pdf>

The division unit 13c divides the data into a plurality of datasets based on the division method that provides the highest amount of information, of the amounts of information calculated by the calculation unit 13b. Thus, for example, when there exist division methods f1 and f2 using respective labels, the division unit 13c compares $I(x, v_{f1})$ and $I(x, v_{f2})$ and divides the data based on the label that provides the higher amount of information. That is to say, the division unit 13c divides the data into vf datasets. Note that a label, for example, f1, is not limited to a label consisting of a single item, such as Src IP, and may also be constituted by a tuple, such as (Src IP, Dst Port). In addition, when the difference between the scores of the amount of information of the labels calculated by the calculation unit 13b is small, the division unit 13c may divide the data into large datasets such that the number of models is small.

The creation unit 13d creates, with use of the datasets divided by the division unit 13c, a learned model for each dataset. For example, the creation unit 13d generates, for each of the divided datasets, a learned model for estimating the probability distribution p(x) from a dataset x by probability density estimation, and stores the learned model in the learned model storage unit 14a. Note that p(x) may be a logarithm, such as log p(x).

The detection unit 13e estimates the probability of occurrence of detection target data using the learned models learned by the creation unit 13d, and if the probability of occurrence is lower than a predetermined threshold value, the detection unit 13e detects an anomaly.

For example, when the acquisition unit 13a has acquired new data x', the detection unit 13e calculates the occurrence probability p(x') using the learned models, and then outputs a report regarding an anomaly, or outputs an alert, if the occurrence probability p(x') is lower than a preset threshold value.

[Processing Procedures of Information Processing Apparatus]

Next, an example of processing procedures of the information processing apparatus 10 according to the first embodiment will be described using Fig. 4. Fig. 4 is a flowchart illustrating an example of the flow of processing performed by the information processing apparatus according to the first embodiment.

As illustrated in Fig. 4, when the acquisition unit 13a of the information processing apparatus 10 acquires data (step S101), the calculation unit 13b creates a list of labels that serve as candidates for division (step S102). Then, the calculation unit 13b calculates the score of the amount of information for each division method (step S103).

Subsequently, the division unit 13c divides the data based on the label of the division method that provides the highest score (step S104). After that, the creation unit 13d creases a learned model for each dataset (step S105).

[Effects of First Embodiment]

As described above, the information processing apparatus 10 according to the first embodiment calculates, with respect to datasets into which data is divided based on individual labels serving as candidates for an index based on which the data is to be divided, the amount of information for each of division methods that use the respective labels. Then, the information processing apparatus 10 divides the data into a plurality of datasets based on the division method that provides the highest amount of information of the calculated amounts of information. Next, with use of the thus divided datasets, the information processing apparatus 10 creates a learned model for each dataset. Therefore, the information processing apparatus 10 can determine an appropriate data division method at a low learning cost.

Moreover, the information processing apparatus 10 according to the first embodiment calculates the amount of mutual information for each multi-label using the MINE, and can therefore calculate the amount of mutual information for each label without involving estimation of the probability distribution p(x) from a dataset x. Thus, the information processing apparatus 10 can reduce the calculation cost.

Moreover, the information processing apparatus 10 according to the first embodiment estimates the probability of occurrence of detection target data using the learned models created by the creation unit 13d, and if the probability of occurrence is lower than a predetermined threshold value, the information processing apparatus 10 detects an anomaly. Thus, the information processing apparatus 10 can detect an anomaly in, for example, an IoT device with high accuracy.

Here, with use of Fig. 5, the results of an experiment that was performed using the information processing apparatus 10 of the first embodiment are shown, and the effects of the embodiment will be described. Fig. 5 is a diagram for explaining the effects of the first embodiment. In the example shown in Fig. 5, a case where $f \in \{f1, f2\}$ and $V_f \in \{0,1\}$ will be described for the sake of simplicity of description. A case is considered in which, in the case of f1, a Gaussian distribution of N(0, 1) is obtained when v = 0, and a Gaussian distribution of N(-1,1) is obtained when v = 1, while in the case of f2, a distribution obtained from N(0,1)+N(-1,1) is normalized both when v = 0 and when v = 1. As can be seen from Fig. 1, when data is compiled using f2, the two distributions are the same. Therefore, it is meaningless to divide the data using f2 and learn the distributions, and it can be understood that it is better to divide the data using f1 and create learned models. Table 1 below shows the results of calculation of scores for f1 and f2 respectively. As shown in Table 1, the score of f1 was better than the score of f2, as intended.

[Table 1]

Table 1

| factor: | f1, | -1.4041003344854974 |
|---------|-----|---------------------|
| factor: | f2, | -5.4578209944355605 |

[Another Embodiment]

In the first embodiment above, a case has been described in which the information processing apparatus 10 has the acquisition unit 13a, the calculation unit 13b, the division unit 13c, the creation unit 13d, and the detection unit 13e; however, the present invention is not limited to this, and the functions of the various units may be distributed to a plurality of apparatuses. Here, a detection system according to another embodiment will be described using Fig. 6. As illustrated in Fig. 6, the detection system according to the other embodiment has a data acquiring apparatus 100, a score calculator 200, a learning machine 300, and a detector 400. The data acquiring apparatus 100 has an acquisition unit 110 and a division unit 120. The score calculator 200 has a calculation unit 210. The learning machine 300 has a creation unit 310. The detector 400 has a detection unit 410.

The acquisition unit 110 of the data acquiring apparatus 100 acquires traffic data as learning data or detection target data. Upon acquiring the data, the acquisition unit 110 sends the acquired data to the score calculator. If detection target data is acquired, the acquisition unit 110 sends the acquired detection target data to the detector 400.

Upon receiving the traffic data, the calculation unit 210 of the score calculator 200 creates a list of labels serving as candidates for division. Then, as in the first embodiment, the calculation unit 210 calculates the amount of mutual information scores and sends the calculated scores to the data acquiring apparatus 100.

Upon receiving the calculated scores, the division unit 120 of the data acquiring apparatus 100 divides the data into a plurality of dataset based on a division method that provides the highest amount of information, of the calculated amounts of information. Then, the division unit 120 sends the datasets to the learning machine 300.

Upon receiving the datasets, the creation unit 310 of the learning machine 300 creates, with use of the received datasets, a learned model for each dataset. Then, the creation unit 310 sends the created learned models to the detector 400.

The detection unit 410 of the detector 400, with use of the learned models created by the creation unit 310, estimates the probability of occurrence of detection target data newly detected by the acquisition unit 13a, and if the probability of occurrence is lower than a predetermined threshold value, the detection unit 410 detects an anomaly.

As described above, in the detection system according to the other embodiment, the plurality of apparatuses have the functional units (the acquisition unit 110, the division unit 120, the calculation unit 210, the creation unit 310, and the detection unit 410) in a distributed manner. The detection system according to the other embodiment achieves similar effects to those of the first embodiment.

[System Configuration, etc.]

The components of the apparatuses illustrated in the drawings are conceptual representation of functions, and need not be physically configured in the manner as illustrated in the drawings. In other words, specific forms of distribution and integration of the apparatuses are not limited to those illustrated in the drawings, and the entirety or a portion of the individual apparatuses may be functionally or physically distributed or integrated in suitable units depending on various loads or use conditions. Furthermore, all or suitable part of the processing functions implemented by the apparatuses may be realized by a CPU and a program analyzed and executed by the CPU, or may be realized by hardware using a wired logic.

Moreover, of the processing steps described herein in the embodiments, all or part of the processing steps that have been described as being performed automatically may also be performed manually.

Alternatively, all or part of the processing steps that have been described as being performed manually may also be performed automatically using a known method. In addition, the processing procedures, control procedures, specific names, and information including various kinds of data and parameters described hereinabove or illustrated in the drawings can be suitably changed unless otherwise stated.

[Program]

It is also possible to create a program that describes processing executed by the information processing apparatus described in the foregoing embodiment and is written in a computer-executable language. For example, it is also possible to create a creation program that describes processing executed by the information processing apparatus 10 according to the embodiment and is written in a computer-executable language. In this case, similar effects to those of the foregoing embodiment can be achieved by a computer executing the creation program. Furthermore, processing similar to that of the foregoing embodiment may be also realized by recording the creation program in a computer-readable recording medium, and causing a computer to load and execute the creation program recorded in this recording medium.

Fig. 7 is a diagram showing a computer that executes the creation program. As illustrated in Fig. 7, a computer 1000 has, for example, a memory 1010, a CPU 1020, a hard disk drive interface 1030, a disk drive interface 1040, a serial port interface 1050, a video adapter 1060, and a network interface 1070, and these units are connected to each other via a bus 1080.

As illustrated in Fig. 7, the memory 1010 includes a ROM (Read Only Memory) 1011 and a RAM 1012. The ROM 1011 stores, for example, a boot program such as a BIOS (Basic Input Output System) . As illustrated in Fig. 7, the hard disk drive interface 1030 is connected to a hard disk drive 1090. As illustrated in Fig. 7, the disk drive interface 1040 is connected to a disk drive 1100. For example, a removable storage medium, such as a magnetic disk or an optical disk, is inserted into the disk drive 1100. As illustrated in Fig. 7, the serial port interface 1050 is connected to, for example, a mouse 1110 and a keyboard 1120. As illustrated in Fig. 7, the video adapter 1060 is connected to, for example, a display 1130.

Here, as illustrated in Fig. 7, the hard disk drive 1090 stores, for example, an OS 1091, an application program 1092, a program module 1093, and program data 1094. That is to say, the above-described creation program is stored in, for example, the hard disk drive 1090 as a program module containing instructions to be executed by the computer 1000.

Moreover, the various kinds of data described in the foregoing embodiments are stored as program data in, for example, the memory 1010 or the hard disk drive 1090. The CPU 1020 loads the program module 1093 or the program data 1094 stored in the memory 1010 or the hard disk drive 1090 into the RAM 1012 as necessary, and executes various processing procedures.

Note that the program module 1093 and the program data 1094 related to the creation program need not be stored in the hard disk drive 1090, and may also be stored in, for example, a removable storage medium and loaded by the CPU 1020 via a disk drive or the like. Alternatively, the program module 1093 and the program data 1094 related to the creation program may also be stored in another computer that is connected via a network (a LAN (Local Area Network), a WAN (Wide Area Network), or the like) and loaded by the CPU 1020 via the network interface 1070.

[Reference Signs List]

| | |
|---|---|
| 1 | Detection system |
| 10 | Information processing apparatus |
| 11 | Input/output unit |
| 12 | Communication unit |
| 13 | Control unit |
| 13a | Acquisition unit |
| 13b | Calculation unit |
| 13c | Division unit |
| 13d | Creation unit |
| 13e | Detection unit |
| 14 | Storage unit |
| 14a | Learned model storage unit |
| 20 | Gateway |
| 30 | Device |
| 40 | External network |
| 100 | Data acquiring apparatus |
| 110 | Acquisition unit |
| 120 | Division unit |
| 200 | Score calculator |
| 210 | Calculation unit |
| 300 | Learning machine |
| 310 | Creation unit |
| 400 | Detector |
| 410 | Detection unit |

**Claims**

1. An information processing apparatus comprising:

a calculation unit configured to calculate, with respect to datasets into which data is divided based on individual labels serving as candidates for an index when the data is divided, an amount of information for each of division methods that use respective labels;
a division unit configured to divide the data into a plurality of datasets based on the division method that provides highest amount of information, of amounts of information calculated by the calculation unit; and
a creation unit configured to create, with use of the datasets divided by the division unit, a learned model for each of the datasets.

2. The information processing apparatus according to claim 1, wherein the calculation unit calculates the amounts of information for the respective labels using a MINE (Mutual Information Neural Estimation).

3. The information processing apparatus according to claim 1, further including: a detection unit configured to estimate probability of occurrence of detection target data using the learned models created by the creation unit, and detect an anomaly when the probability of occurrence is lower than a predetermined threshold value.

4. A creation method executed by an information processing apparatus, the creation method comprising the steps of:

calculating, with respect to datasets into which data is divided based on individual labels serving as candidates for an index when the data is divided, an amount of information for each of division methods that use respective labels;
dividing the data into a plurality of datasets based on the division method that provides highest amount of information, of amounts of information calculated in the calculating step; and
creating, with use of the datasets divided in the dividing step, a learned model for each of the datasets.

5. A creation program that causes a computer to execute the steps of:

calculating, with respect to datasets into which data is divided based on individual labels serving as candidates for an index when the data is divided, an amount of information for each of division methods that use respective labels;
dividing the data into a plurality of datasets based on the division method that provides highest amount of information, of amounts of information calculated in the calculating step; and
creating, with use of the datasets divided in the dividing step, a learned model for each of the datasets.

Fig. 1

Fig. 2

INFORMATION PROCESSING APPARATUS ⌐10

⌐11
INPUT/ OUTPUT UNIT

⌐12
COMMUNICATION UNIT

⌐13
CONTROL UNIT

⌐13a
ACQUIRING UNIT

⌐13b
CALCULATING UNIT

⌐13c
DIVIDING UNIT

⌐13d
CREATION UNIT

⌐13e
DETECTING UNIT

⌐14
STORAGE UNIT

⌐14a
LEARNED MODEL STORAGE UNIT

Fig. 3

| Src IP | Dst IP | Src Port | Dst Port | Up packet | Down packet | ... | Time |
|--------|--------|----------|----------|-----------|-------------|-----|------|
| A | C | 1 | 3 | xxx | xx | ... | 12:00:12,234 |
| A | D | 2 | 3 | yyy | yy | ... | 12:00:12,561 |
| ⋮ | ⋮ | ⋮ | ⋮ | ⋮ | ⋮ | ⋮ | ⋮ |

Fig. 4

```
                              ┌──────────────┐
                              │    START     │
                              └──────┬───────┘
                                     │
                      ┌──────────────▼───────────────┐  ⌠S101
                      ◄      IS DATA ACQUIRED?        ►──────── No
                      └──────────────┬───────────────┘
                                     │Yes          ⌠S102
                      ┌──────────────▼──────────────────┐
                      │ CREATE LIST OF LABELS SERVING AS │
                      │      CANDIDATES FOR DIVISION      │
                      └──────────────┬──────────────────┘
                                     │              ⌠S103
                      ┌──────────────▼──────────────────┐
                      │   CALCULATE SCORE OF AMOUNT OF   │
                      │ INFORMATION FOR EACH DIVISION METHOD │
                      └──────────────┬──────────────────┘
                                     │              ⌠S104
                      ┌──────────────▼──────────────────┐
                      │ DIVIDE DATA BASED ON LABEL OF DIVISION │
                      │ METHOD THAT PROVIDES THE HIGHEST SCORE │
                      └──────────────┬──────────────────┘
                                     │              ⌠S105
                      ┌──────────────▼──────────────────┐
                      │ CREATE LEARNED MODEL FOR EACH DATASET │
                      └──────────────┬──────────────────┘
                                     │
                              ┌──────▼───────┐
                              │     END      │
                              └──────────────┘
```

Fig. 5

Fig. 6

DATA ACQUIRING APPARATUS 100

ACQUIRING UNIT 110

DIVIDING UNIT 120

SCORE CALCULATOR 200

CALCULATING UNIT 210

DETECTOR 400

DETECTING UNIT 410

LEARNING MACHINE 300

CREATION UNIT 310

Fig. 7

EP 3 955 178 A1

**EP 3 955 178 A1**

## INTERNATIONAL SEARCH REPORT

| | International application No. |
|---|---|
| | PCT/JP2019/019963 |

### A. CLASSIFICATION OF SUBJECT MATTER
Int.Cl. G06N20/00(2019.01)i

According to International Patent Classification (IPC) or to both national classification and IPC

### B. FIELDS SEARCHED

Minimum documentation searched (classification system followed by classification symbols)
Int.Cl. G06N20/00

Documentation searched other than minimum documentation to the extent that such documents are included in the fields searched
Published examined utility model applications of Japan    1922–1996
Published unexamined utility model applications of Japan  1971–2019
Registered utility model specifications of Japan          1996–2019
Published registered utility model applications of Japan  1994–2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-261321 A (MITSUBISHI ELECTRIC CORPORATION) 22 September 2000 (Family: none) | 1-5 |
| A | JP 2016-191966 A (MEGACHIPS CORPORATION) 10 November 2016 (Family: none) | 1-5 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16.07.2019 | 30.07.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. P. KINGMA ; M. WELLING.** *Auto-Encoding Variational Bayes,* 01 March 2014, https://arxiv.org/pdf/1312.6114.pdf